# EUROPÄISCHE PATENTSCHRIFT

(11) **EP 1 784 251 B1**
(45) Veröffentlichungstag und Bekanntmachung des Hinweises auf die Patenterteilung: **18.11.2009**
(21) Anmeldenummer: 04764808.4
(22) Anmeldetag: 03.09.2004
(51) Int. Cl.: B01F 3/08, B01F 3/04, B01F 3/12, B01F 5/06, B01F 5/04, B01J 19/24

(54) **MEHRKAMMERSUPERKAVITATIONSREAKTOR**
MULTI-CHAMBER SUPERCAVITATION REACTOR
REACTEUR A SUPERCAVITATION COMPRENANT PLUSIEURS CHAMBRES

(43) Veröffentlichungstag der Anmeldung: 16.05.2007
(73) Patentinhaber: Crenano Gmbh, 82152 Martinsried (DE)
(72) Erfinder: SCHÜLER, Rolf, 85457 Wörth (DE)
(74) Vertreter: Graf von Stosch, Andreas
(86) Internationale Anmeldenummer: PCT/EP2004/009856
(87) Internationale Veröffentlichungsnummer: WO 2006/027002

(56) Entgegenhaltungen:
- DE-A1- 10 009 326
- DE-A1- 10 310 442
- SU-A1- 1 124 063
- US-A- 4 344 752
- US-A- 5 810 052
- DATABASE WPI Week 198523, Derwent Publications Ltd., London, GB; Class F09, AN 1985-139759 & SU 1 124 063 A (KIEV NATIONAL ECONO) 15 November 1984

## Beschreibung

Eine Vorrichtung zur molekularen Integration und Desintegration von festen, flüssigen und/oder gasförmigen hindurchströmenden, mitströmenden und/oder gegenströmenden Komponenten mittels Kavitation, um molekulare Verbindungen zu verändern, auf- oder abzubauen. Die Erfindung bietet die Möglichkeit aus nicht oder nur schwer vermischbaren Komponenten stabile Mischungen zu erhalten oder solche Mischungen zu trennen. Ebenso können auch komplexe Verbindungen die bisher nicht oder durch sehr aufwendige Mehrfachbearbeitung und mit großen technischen Aufwand zu verändern und/oder herzustellen waren, mittels des vorliegenden Superkavitations-Molekularreaktors,mit sehr geringem energetischen Aufwand auf- oder abgebaut bzw. verändert werden.

### Hintergrund der Erfindung/Stand der Technik

Die Erfindung betrifft eine Vorrichtung zur molekularen Integration und Desintegration von festen, flüssigen und/oder gasförmigen hindurchströmenden, mitströmenden und gegenströmenden Komponenten mittels Kavitation. Dabei wird in einem Reaktor, vorzugsweise einem Durchflussreaktor ein hydrodynamisches Kavitationsfeld aufgebaut.

Aus dem Stand der Technik sind kavitative Durchflussreaktoren, bei denen die Kavitationsfelder mittels Ultraschall generiert werden, bekannt. Je nach Anzahl und Anordnung der Ultraschallgeneratoren lassen sich damit auch Superkavitationsfelder aufbauen, das heißt eine Überlagerung von mehreren Kavitationsfeldern, die die Wirkung wesentlich verbessern. Sie werden dazu benutzt, molekulare Verbindungen, z. B. Schadstoffe, zu desintegrieren bzw. neue molekulare Verbindungen zu integrieren. Allen gemeinsam ist jedoch, dass die Erzeugung von Kavitationsfeldern mittels Ultraschall sehr energieaufwendig ist und damit nur bei begrenzten Mengen wirtschaftlich einsetzbar ist.

Hydrodynamische Kavitationsgeneratoren sind aus dem Stand der Technik bekannt. Auch diese lassen sich durch entsprechende Anordnung der schwer umströmbaren Körper zu Superkavitationsgeneratoren erweitern, entsprechend DE10009326. Hierbei handelt es sich meist um statische Komponenten, die durch Versuche für die jeweiligen Fluide optimiert werden müssen. Eine Regulierungsfunktion wird dann durch Variation des Vordrucks bzw. Verschiebung der turbulenzerzeugenden Elemente erreicht. Diese hydrodynamischen Superkavitationsgeneratoren nach dem Stand der Technik erzielen gute Ergebnisse beim Vermischen von Bestandteilen bzw. Komponenten eines hindurchströmenden Massestromes, mittels eines aufgebauten Superkavitationsfeldes.

Bei den bisher bekannten Systemen war die Regulierung über den Vordruck bzw. die Anordnung der turbulenzerzeugenden Systeme notwendig. Je nach verwendeten Komponenten ist die Regulierbarkeit und/oder maximale Höhe des Vordrucks aber limitiert und oft nur schwer möglich. Außerdem muss bei der Verschiebung oder Variation der turbulenzerzeugenden Systeme jeweils eine mechanische Änderung bzw. kompletter Umbau oder anderweitiger Aufbau der Apparatur vorgenommen werden, die eine oftmalige und aufwendige Optimierung erfordern. Die mechanische Variierbarkeit dieser turbulenzerzeugenden Systeme geht dabei zu Lasten einer einfachen und Kosten effektiven Bauweise bzw. macht anderweitige Kompromisse in der Effektivität notwendig. Für viele Komponenten ist dieses Problem noch nicht gelöst bzw. ohne Änderungen am Funktionsprinzips von Kavitationsreaktoren nicht möglich.

Document SU-A-1124063 offenbart eine Vorrichtung gemäβ dem Oberbegriff des Anspruchs 1.

### Offenbarung der Erfindung

Der Erfindung liegt die Aufgabe zu Grunde, eine Vorrichtung zur molekularen Integration und Desintegration von festen, flüssigen und/oder gasförmigen hindurchströmenden, parallelströmenden und gegenströmenden Komponenten zu schaffen, die abhängig oder unabhängig von hohen oder niedrigen Vordrücken und unabhängig von Zusammensetzung und Dichteunterschieden der Komponenten in der Lage ist, aufgrund ihrer dynamische Regulierungsmöglichkeiten ständig ein hochwirksames Superkavitationsfeld zu gewährleisten. Der Durchfluss einer Komponente in einem Hauptstrom ist dabei nicht mehr zwangsläufig notwendig, sondern kann in mehrere Nebenströme aufgespalten werden.

Diese Aufgabe wird im Molekularreaktor, sprich in der erfindungsgemäßen Vorrichtung durch die Merkmale des Anspruchs 1 gelöst. Bevorzugte Merkmale der Erfindung sind in den abhängigen Ansprüchen angegeben. Vorzugsweise ist die erfindungsgemäße Vorrichtung derart aufgebaut, dass in der Mittelachse der Durchflusskammer Zufuhrungskanäle/Abfuhrungskanäle eingeführt sind, über die Komponenten, beispielsweise Fluide, entgegen und mit der Strömungsrichtung des Massestromes eingebracht/abgeführt werden können, die in Verbindung mit den schwer umströmbaren Körpern ein hocheffiziente gegenläufige Überlagerung von mindestens zwei Superkavitationsfeldern gewährleisten. Das hierbei freigesetzte energetische Potential schafft die Voraussetzung zum Aufbau neuer oder Umbau/Abbau bestehender molekularer Verbindungen und/oder dient der homogenisierten Vermischung und/oder Lösung und/oder Suspension der entgegenströmenden und mitströmenden Komponenten.

Die erfindungsgemäße Vorrichtung zur molekularen Integration und Desintegration von festen, flüssigen und/oder gasförmigen Komponenten mittels Kavitation baut in einem Reaktor ein hydrodynamisches Kavitationsfeld auf, das vielfältig genutzt werden kann: Zum einen kann es zur physikalischen Vermischung von schwer mischbaren und/oder lösbaren Komponenten, z. B. hydrophoben und hydrophilen Gemischen wie Wasser/Öl, Milch/Fett, Kraftstoff/Wasser, herangezogen werden, zum anderen kann es eingesetzt werden, um in Abhängigkeit von der Konzentration der beigemengten bzw. gelösten Stoffe (z. B. Gase) Radikale, reaktive Zwischenstoffe (wie z. B. Polyoxide) zu erzeugen, die als Katalysatoren sowie als Reaktionspartner sowohl Abbau, Aufbau oder Umbau molekularer Verbindungen benutzt werden können. Damit werden Reaktionen von unter Standardbedingungen inkompatiblen (z. B. nicht mischbaren) Komponenten ermöglicht. Beispiele solcher Reaktionen umfassen das Mischen, Emulgieren, Dispergieren, Homogenisieren, Entmischen, Trennen, Entgasen und Begasen in Systemen, die Komponenten in Form von fest-flüssig, flüssig-fest, flüssig-flüssig, gasförmig-flüssig, flüssig-gasförmig Phasen umfassen.

In einem modifizierten Aspekt der Erfindung wird die Herstellung neuer Materialien, ein weites Feld neuartiger, alternativer oder verbesserter chemischer Reaktionen sowie die Elektrolyse und/oder Reaktion in einem angelegten Magnetfeld innerhalb des Kavitationsfeldes bereitgestellt.

In einer bevorzugten Ausführungsform werden Kavitationsfelder durch Druckvariation gesteuert und die Masseströme mit unterschiedlichsten Drücken im Mitstrom- oder Gegenstromverfahren verbunden, was die folgende Vorteile gegenüber außerhalb des Kavitationsfelds vorgemischten Systemen bietet:
Die Steuerung erfolgt dabei durch Variation des Vordruckes des Massestromes und/oder durch Variation des Druckes der mit und entgegen der Strömungsrichtung zugeführten Masseströme der Komponenten und kann unterstützend, muss aber nicht über eine mechanische Variation der Appratur erfolgen. Eine bevorzuge Ausführungsform hierfür stellt die Vorrichtung (200) mit Kammerkavitator (Vorrichtung (300)) und die Vorrichtung (500) dar.

Die Reaktionssteuerung der Kavitation der Masseströme erfolgt über unterschiedliche Einlassdrücke/Auslassdrücke der Masseströme an dem Gehäuse (1-1) und den Kavitationsskammerreaktor nach Vorrichtung (300) sowie über die Zuführung/Abführung von Massestrom oder Mischstromkomponenten in das oder aus dem Kammergehäuse II bzw. Mischstromkomponenten über die Einlasstutzen/Auslassstzutzen (2-3) und/oder (2-8).

Durch die voneinander unabhängige Erhöhung und/oder Senkung des Drucks von Masseströmen oder Mischstromkomponenten im Kammergehäuse II (2-2) sowie den Einlassöffnung/Auslassöffnungen (2-3) entstehen Überlagerungen von Kavitationsfeldern bereits im Bereich der Düsenverengung (2-5-1). Der Kammerkavitator nach Vorrichtung (300) kann dabei durch Trennwände (3-6) in mehrere Einzelkammern unterteilt sein, über die unterschiedliche Komponenten zu- oder abgeführt werden können. Dieser Mechanismus kann ebenfalls zur Steuerung verwendet werden. Die Massenströme können unter anderem durch Druck von außen und/oder Unterdruck von innen in die Apparatur eingebracht, bzw. durch Unterdruck von außen und/oder Überdruck von innen aus der Apparatur entfernt werden

Durch den Effekt des Mitreißens der Masseströme aus dem Hauptkammergehäuse I (2-6) und somit der Erhöhung der Fließgeschwindigkeit der Masseströme im Hauptkammerbereich insbesondere an den Abrissprallflächen des Reaktionskörpers (2-1) ohne mechanische Veränderung der schwer umströmbaren Körper (Reaktionskörper) (schwer umströmbaren Körper (1-8) und/oder schwer umströmbare Teilbereiche (1-9) und/oder Kammerkavitatoren nach Vorrichtung (300)) werden die Superkavitationsfelder erzeugt. Diese Steuerung ist variabel und flexibel anwendbar auf den Massestrom entsprechend der Viskosität der entsprechenden Medien. Diese Druck gesteuerte Reaktionsänderung bezeichnet man als "Kontrollierte Kavitation" (Cavi Control Technology: "CCT") und ist teilweise Grundlage der Erfindung. Im Gegensatz zum Stand der Technik wird die Steuerung ausschließlich über den Druck durchgeführt und kann in einer bevorzugten Ausführung an verschiedenen Stellen innerhalb des Gehäuses (1-1) und verschiedene Masseströme mit verschiedenen Komponenten erfolgen und somit zu einer gezielten Steuerung der einzelnen Vorgänge an verschiedenen Stellen der Vorrichtung (100) genutzt werden.

In einem Mehrfachkammerreaktor können auch mehrere Reaktoren hintereinander oder ineinander geschachtelt werden.

Durch die Kombination unterschiedlichster Masseströme im Reaktor können in einer besonderen Ausführungsform Teile der Komponentenströme in einer Art Kreislauf bis zum gewünschten Effekt mehrfach eingeschleust werden.

In einer anderen bevorzugten Ausführungsform kann zudem die Variation (vorzugsweise die Grundeinstellung) der Kavitationsfelder in der erfindungsgemäßen Vorrichtung durch Variation der Position der schwer umströmbaren Körper entlang oder senkrecht zur Mittelachse der Durchflusskammer erfolgen, wodurch Bandbreiten für die anzulegenden Drücke festgelegt werden bzw. die Reaktionsbedingen und/oder Lösungsbedingungen der unterschiedlichen Komponenten durch Variation der Kavitationswirkung festgesetzt werden.

Die erfindungsgemäße Vorrichtung bietet im Einzelnen Einsatzfelder in der Verwendung
a. zum Entgasen von Wasser oder anderer gashaltiger Stoffe,
b. zum Verbinden entgasten Wassers oder gashaltiger Stoffe mit hydrobohoben Soffen (wie z. B. Öl, Wachs, oder andere nicht oder schwer wasserlösliche Verbindungen,
c. zur Methanolsynthese durch Mischen von entgastem Wasser mit Methan,
d. zur Aufbereitung von Wasser und Klärschlämmen,
e. zur Verbesserung der Effektivität von Biogasreaktoren,
f. zum Einbringen von Gasen in Lebensmittel, vorzugsweise zur Stammwürzbelüftung bei der Bierherstellung, der Carbonisierung von Mineralwasser oder der Sauerstoffanreicherung von 02-Wasser,
g. zur Homogenisierung von Lebensmitteln , vorzugsweise Milch,
h. zur Anreicherung von Brennstoffen und Kraftstoffen, vorzugsweise Diesel, Heizöl und/oder Benzin, mit verbrennungsfördernden Gasen wie Luft oder Sauerstoff, oder Wasser vor dem Verbrennungsprozess,
i. zur Stabilisierung und Homogenisierung von Kraftstoff und Brennstofflagern über längeren Zeitraum als bisher (z. B. Bevorratung von Heizöl)
j. zur Belüftung von Gewässern in der Umweltrenaturierung,
k. zum Schwermetallaufbruch in organischer Feststoffmatrix,
l. zur Keimabtötung z. B. in Trinkwasser, Abwässern und Schwimmbädern, sowie in verfahrenstechnischen Anlagen durch mechanische Abtötung,
m. zur Keimabtötung z. B. in Trinkwasser, Abwässern und Schwimmbädern, sowie in verfahrenstechnischen Anlagen durch effektive Reduzierung der benötigten Mengen an Chlor oder Ozon durch deren bessere Einbindung in Wasser, oder
n. zur Vormischung von Mehrkomponentensystem vor chemischen Prozessen,
o. zur Durchführung chemischer Prozesse, die in Kavitationsfeldern ablaufen,
p. zur Verwendung in Whirlpoolanlagen und/oder Saunen im medizinischen Bereich/Fitnessbereich für Luft- und/oder Sauerstoff-Therapien und/oder Sauerstoffbäder.

### Beschreibung der Figuren:

### Figur1:

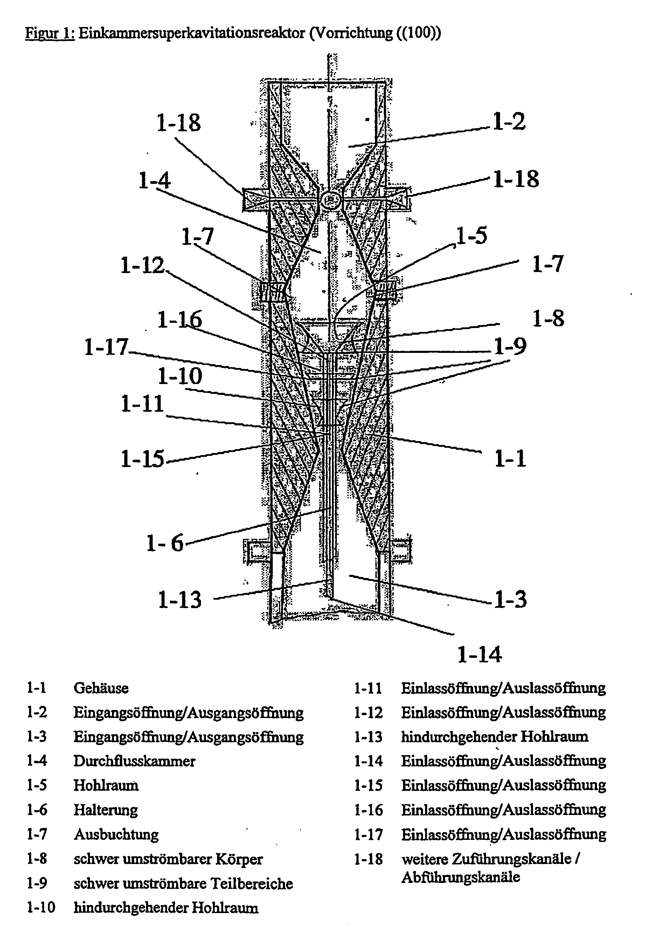

Figur 1 zeig das Funktionsprizip der Vorrichtung (100) und weist die folgenden Merkmale und Komponenten auf:
- 1-1: Gehäuse
- 1-2: Eingangsöffnung/Ausgangsöffnung
- 1-3: Eingangsöffhung/Ausgangsöffnung

- 1-4: Durchflusskammer
- 1-5: Hohlraum
- 1-6: Halterung (kann an beliebigen Stellen des Gehäuses (1-1) angebracht sein
- 1-7: Ausbuchtung
- 1-8: schwer umströmbarer Körper
- 1-9: schwer umströmbare Teilbereiche
- 1-10: hindurchgehender Hohlraum
- 1-11: Einlassöffnung
- 1-12: Einlassöffnung/Auslassöffnung
- 1-13: hindurchgehender Hohlraum
- 1-14: Einlassöffnung
- 1-15: Einlassöffnung/Auslassöffnung
- 1-16: Einlassöffnung/Auslassöffnung
- 1-17: Einlassöffnung/Auslassöffnung
- 1-18: weitere Zuführungskanäle/Abführungskanäle

### Figur 2:

Figur 1 zeigt eine Prototypen-Vorrichtung (Vorrichtung ((200)) der vorliegenden Erfindung (bzw. zur Vorrichtung (100)) und weist die folgenden Merkmale und Komponenten auf:
- 2-1: Reaktionskörper [entspricht einer bevorzugten Ausführung von 1-9 der Vorrichtung (100)]
- 2-2: Kammergehäuse [entspricht einer bevorzugten Ausführung von 1-10 und 1-13 der Vorrichtung (100)]

- 2-3: Einlassstutzen/Auslassstutzen [entspricht einer bevorzugten Ausführung von 1-14 der Vorrichtung (100)]
- 2-4: Ein- und Ausströmöffnung [entspricht einer bevorzugten Ausführung der Einlassöffnungen/Auslassöffnungen der Vorrichtung (100)]
- 2-5: Kammergehäuse Ein- und Ausgang [entspricht einer bevorzugten Ausführung der Einlassöffnungen/Auslassöffnungen der Vorrichtung (100)]
- 2-5-1: Düsenverengung für Kavitationsfeldüberlagerung
2-6 Hauptkammergehäuse [entspricht einer bevorzugten Ausführung von 1-1 der Vorrichtung (100)]
- 2-7: Zustromverengung
2-8 Hauptkammergehäuse Ein- und Ausgang [entspricht einer bevorzugten Ausführung von 1-2 und 1-3 der Vorrichtung (100)]

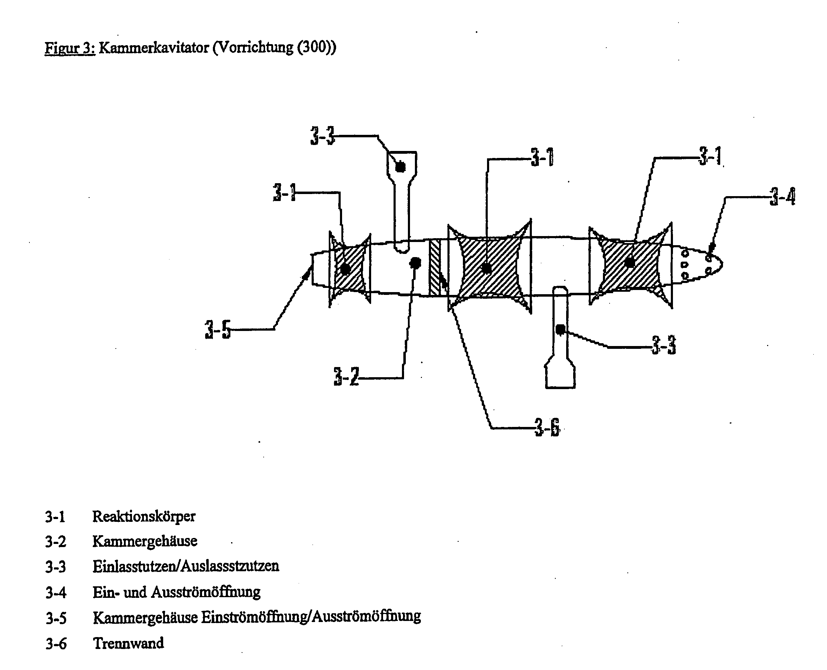

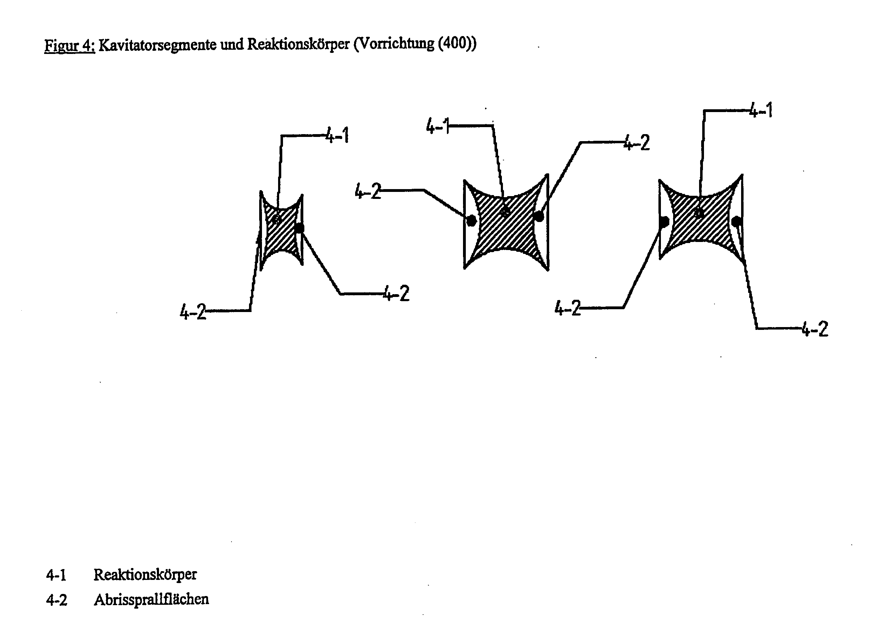

Die Reaktionskörper (2-1) (siehe Beschreibung Figur 3 und Figur 4) sind am Kammergehäuse (2-2) befestigt. Das Kammergehäuse (2-2) verfügt über keine/eine oder mehrere Ein- und Ausströmöffnung (2-4) und mindestens einen Düsen Ein- und Ausgang (2-5). Die ausströmende Komponente wird über mindestens einen Einlasstutzen/Auslassstzutzen (2-3) und den Ein- und Ausgängen des Hauptkammergehäuses (2-8) zugeführt, der zudem als Aufhängung für den Reaktionskörper (2-1) fungiert. Das Hauptkammergehäuse (2-6) selbst mit geradem oder einfach/und oder mehrfach konischem Aufbau kann über Zustromverengungen (2-7), Düsenverengungen (2-5-1), Ein- und Ausgänge zum Hauptkammergehäuse (2-8), Einlassstutzen (2-3) zur Zuführung weiterer Komponenten oder zur Druckregulation und damit Kavitationsregulierung verfügen. Zudem können weitere Einlasstutzen/Auslassstzutzen (2-3) und Ein- und Ausströmöffnungen (2-4) angebracht sein. Diese dienen zum Abfluss oder Zufluss von Komponenten.

### Figur 3:

Figur 3 zeigt anhand des Kammerkavitators Vorrichtung (300) eine bevorzugte Ausführungsform der vorliegenden Erfindung bzw. des schwer umströmbaren Körpers (1-8) der Vorrichtung (100) und weist die folgenden Merkmale und Komponenten auf:
- 3-1: Reaktionskörper
- 3-2: Kammergehäuse
- 3-3: Einlasstutzen/Auslassstzutzen (an allen Stellen des Reaktionskörpers anbringbar)
- 3-4: Ein- und Ausströmöffnung
- 3-5: Kammergehäuse
- 3-6: Trennwand

### Figur 4:

Figur 4 zeigt die Kavitatorsegmente Vorrichtung (400) in einer bevorzugten Ausführungsform der vorliegenden Erfindung und der schwer umströmbaren Teilbereiche (1-9) der Vorrichtung (100) und weist die folgenden Komponenten und Merkmale auf:
- 4-1: Reaktionskörper
- 4-2: Abrissprallflächen

Die Reaktionskörper sind Teile der schwer umströmbaren Körper und weisen auf Ihren Oberflächen Eigenschaften auf, die zusätzliche Verwirbelungen und Stromabrisse verursachen.

### Figur 5:

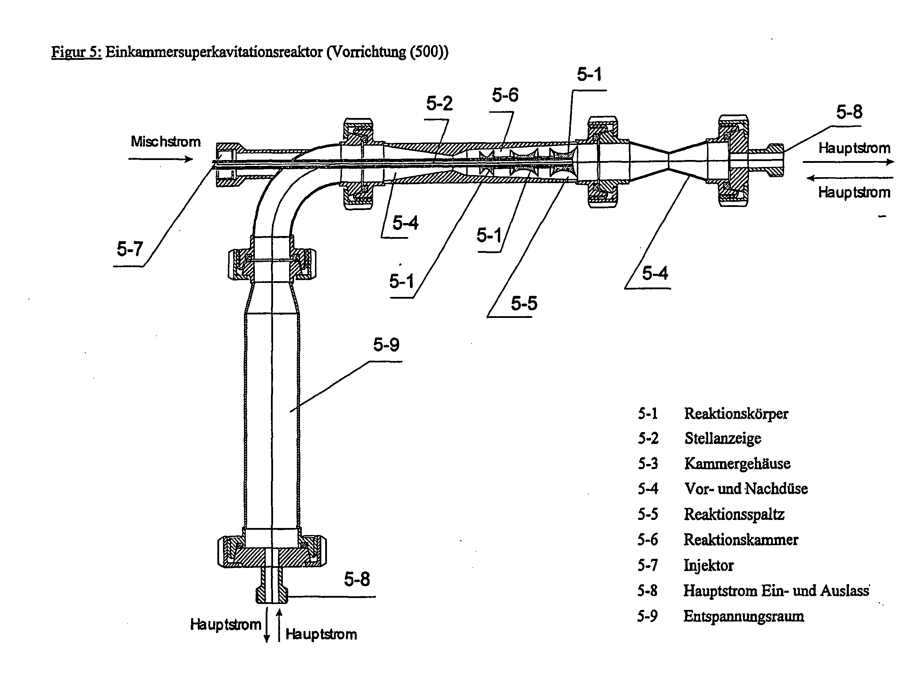

Figur 5 zeigt das Funktionsprinzip eines Superkavitationsreaktors (Vorrichtung 500) und weist die folgenden Merkmale und Komponenten auf:
- 5-1: Reaktionskörper
- 5-2: Stellanzeige
- 5-3: Kammergehäuse
- 5-4: Vor- und Nachdüse
- 5-5: Reaktionsspalt
- 5-6: Reaktionskammer
- 5-7: Injektor
- 5-8: Hauptstrom Ein- und Auslass
- 5-9: Entspannungsraum

### Ausführungsbeispiele:

### 1. Verbesserte Funktion

Verglichen mit anderen Systemen des Stands der Technik (DE1009326) konnten in Experimenten mit der Vorrichtung (100) höhere Vermischungsgrade, bei geringerem Druck erwirkt werden. Dadurch verkürzt sich auch die Zyklenzahl eventueller Wiederholungen des Prozesses. Alle diese Vereinfachungen stellen optimieren das Kostenpotential der Anwendung. Insbesondere im Vergleich zu energieaufwendigen Kavitationserzeugenden Verfahren wie Ultraschall und Lasertechnik stellt die Erfindung eine kostengünstige, weniger energieaufwendige und einfacher zu steuernde und zu installierende Verfahrensweise dar.

### 2. Neue und verbesserte Anwendungen

Beim Entgasen von Wasser konnte bereits nach einmaligem Reaktionszyklus eine geringere Menge an gelösten Gasen (z. B. Sauerstoff) nachgewiesen werden, als bei >5 Reaktionszyklen mit Systemen aus dem Stand der Technik.

Bei der Vermischung von hydrophoben und hydrophilen Substanzen konnte eine schnellere, effizientere und länger anhaltende Vermischung bewirkt werden. Beispielsweise weist eine Emulsion von Wasser in Kraftstoffe eine kleinere Tröpfchengröße der Wasserpartikel auf und im Gegensatz zu herkömmlichen Systementen war auch nach längerer Zeit keine Entmischung feststellbar.

Eine Synthese von Methanol aus Wasser und Methan konnte mit einem wesentlich höheren Wirkungsgrad als mit herkömmlichen Systemen durchgeführt werden.

In Abwässern und bakteriologisch kontaminierten Abwässern konnte eine Sterilisation des Wassers nach Behandlung mit einer Vorrichtung (100) nachgewiesen werden.

Klärschlämme zeigten einen schnelleren biologischen Abbau, indem schwer lösliche Inhaltsstoffe aufgeschlossen wurden und eine Belüftung zum biologischen Abbau durchgeführt werden konnte.

Die Belüftung von Stammwürze mit Kohlendioxid während der Bierherstellung erfolgt ebenfalls effektiver und ist über das System erstmalig reproduzierbar steuerbar.

Die Carbonisierung von Wasser mit Kohlendioxid zur Mineralwasserherstellung erfolgt effektiver unter schnellerer und quantitativ höherer Lösung von Kohlendioxid, was zu komplett neuen mousierenden Geschmacksrichtungen der carbonisierten Getränke führt.

Die schwierige Lösung von Sauerstoff in Getränken oder Wasser konnte mit höherer Sauerstofflöslichkeit als mit herkömmlichen Verfahren durchgeführt werden.

Milch konnte durch Behandlung mit der Vorrichtung (100) homogenisiert werden und machte den bekannten technisch üblichen Homogenisierungsprozess überflüssig.

Die für effektivere Motorleistung gewünschte Anreicherung des Kraftstoffs mit Wasser oder Sauerstoff für PKW/LKW Antriebsmotoren konnten im Stand der Technik bisher nicht gelöst werden. Durch die Vorrichtung (100) konnte Wasser und Sauerstoff in Kraftstoff meachnisch so fein suspendiert werden, dass keine Trennung erfolgte und der Verbrennungsprozess so durch den neuen Kraftstoff effektiver und umweltschonender durchgeführt werden kann.

Die Belüftung von Gewässern in der Umweltrenaturierung erfolgt nach dem Stand der Technik durch eine Luftdurchströmung des zu renaturierenden Gewässers. Durch die Erfindung erfolgte eine effektivere Lösung des Gases in dem zu belüftenden Gewässer.

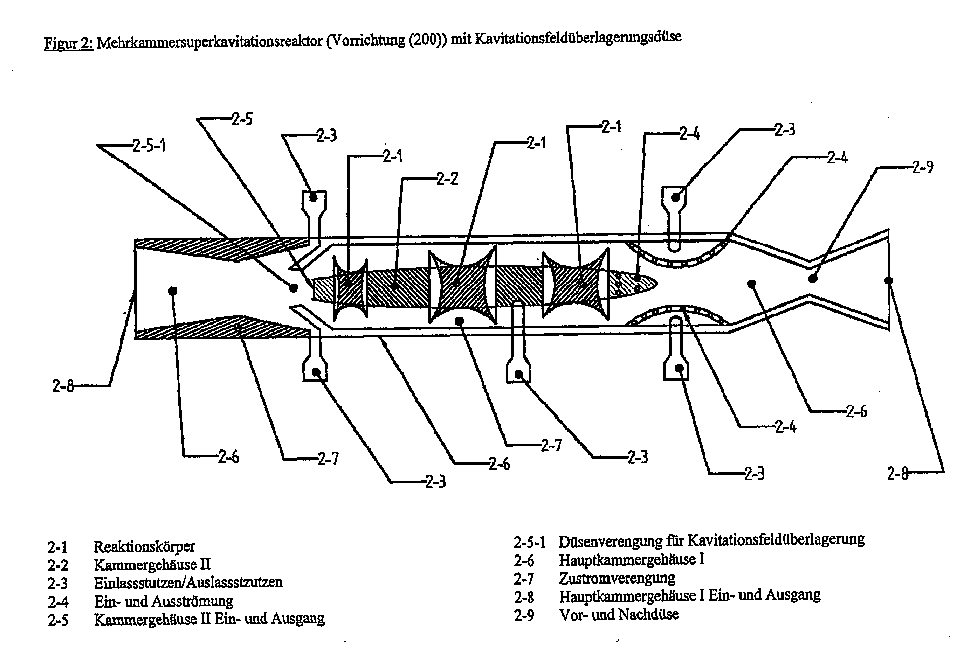

Durch die hohen Kavitationskräfte können komplexe Verbindungen wie Schwermetalle in Abwässern aufgebrochen werden und später leichter abgeschieden werden. Gase konnten dabei aus dem System isoliert und abgetrennt werden, Salze bei Anlegung eines elektrischen Feldes abgeschieden werden (Elektrolyse über Hauptkammer und Kammergehäuse) (vgl. Figur 2).

Die oben erwähnte Effekte zur Sterilisation von Abwässern konnte auch zur Keimabtötung in Schwimmbädern eingesetzt werden, so dass die Chlorierung vermieden werden konnte, bzw. geringer Mengen Desinfektionsmitteln zugesetzt werden mussten. Auch bei der Zusetzung solcher Desinfektionsmittel wie Chlor und Ozon konnte eine effektivere Einbringung erzielt werden. Gleiches gilt für die Aufbereitung von Trinkwasser, sowie die Sterilisation von Produktionsmedien in verfahrenstechnischen, lebensmitteltechnischen und biotechnologischen Anlagen.

Für ausgewählte chemische Prozesse wie beispielsweise die Methanolsynthese oben konnte eine schnelle und effektive Reaktion der Komponenten erzielt werden. Insbesondere konnten hydrophobe und hydrophile Komponenten durch die Vorrichtung (100) effektiv gemischt werden, und für die Reaktion konnten die hohen Energien beim Implodieren der Kavitationsblasen genutzt werden.

## Patentansprüche

1. Vorrichtung zum Vermischen oder Entmischen von festen, flüssigen oder gasförmigen Komponenten eines Massestroms oder mehrerer hindurchströmender, mitströmender und/oder gegenströmender Masseströme mittels eines hydrodynamischen Superkavitationsfeldes oder mehrerer hydrodynamischer Superkavitationsfelder, um eine Mischung, eine Emulsion oder eine Suspension, sowie neuartige molekulare Verbindungen bzw. Trennungen zu erzeugen, mit
einem Gehäuse (1-1), das eine oder mehrere Eingangsöffnungen (1-2) für die Zufuhr mindestens eines Teils eines Massestromes und eine oder mehrere Ausgangsöffnungen (1-3) für die Abfuhr eines Massestromes aufweist,
wobei das Gehäuse (1-1) eine Durchflusskammer (1-4) mit einem darin mittels einer Halterung (1-6) angeordneten schwer umströmbaren Körper (1-8) zur Erzeugung des Superkavitationsfeldes bzw. der Superkavitationsfelder aufweist,
wobei der schwer umströmbare Körper (1-8) mindestens einen schwer umströmbaren Teilbereich (1-9) besitzt, der für jeweils eine lokale Strömungseinengung sorgt, wobei der Querschnitt der Durchflusskammer (1-4), der senkrecht zu ihrer Mittelachse genommen wird, wenigstens in einem Teil des Bereichs, der den schwer umströmbaren Körper (1-8) umgibt, bei wechselnder Strömungsrichtung des durch die Durchflusskammer (1-4) durchströmenden Gesamtmassestromes zuerst größer und dann kleiner wird,
**dadurch gekennzeichnet, dass** der schwer umströmbare Körper (1-8) auf einem Kammergehäuse (2-2,3-2) aufgebracht ist, dass das Kammergehäuse (2-2, 3-2) mit einer oder mehreren in der Durchflusskammer angeordneten Aufhängungen am Gehäuse angebracht ist, und dass an dieser Aufhängung bzw. an diesen Aufhängungen mindestens einen Einlass- bzw. Auslassstutzen (2-3, 3-3) zum Zufluss bzw. Abfluss von Komponenten angebracht ist.

2. Vorrichtung nach Anspruch 1, **dadurch gekennzeichnet, dass** der schwer umströmbare Körper (1-8) entlang der Richtung der Mittelachse der Durchflusskammer (1-4) verschiebbar ist.

3. Vorrichtung nach Anspruch 1 oder 2, **dadurch gekennzeichnet, dass** der schwer umströmbare Körper (1-8) senkrecht zur Richtung der Mittelachse der Durchflusskammer (1-4) verschiebbar ist.

4. Vorrichtung nach einem der vorhergehenden Ansprüche, **dadurch gekennzeichnet, dass** der mindestens eine schwer umströmbare Teilbereich (1-9) so ausgebildet ist, dass sein Querschnitt, der senkrecht zu der Mittelachse der Durchflusskammer (1-4) genommen wird, an dem Ende des Teilkörpers, das der Eingangsöffnung (1-2) am nächsten liegt, größer ist als an dem Ende, das der Ausgangsöffnung (1-3) am nächsten liegt.

5. Vorrichtung nach einem der vorhergehenden Ansprüche, **dadurch gekennzeichnet, dass** der mindestens eine schwer umströmbare Teilbereich (1-9) als Kegelstumpf ausgebildet ist.

6. Vorrichtung nach einem der vorhergehenden Ansprüche, **dadurch gekennzeichnet, dass** der mindestens eine schwer umströmbare Teilbereich (1-9) als Kegelstumpf und/oder Zylinder mit konkaven und/oder konvexen Flächen ausgebildet ist.

7. Vorrichtung nach einem der vorhergehenden Ansprüche, **dadurch gekennzeichnet, dass** der schwer umströmbare Körper (1-8) so angeordnet ist, dass der Scheitelpunkt der Durchflusskammer (1-4) mindestens eine Ausbuchtung (1-7) enthält, die in Strömungsrichtung des durch die Durchflusskammer (1-4) hindurchströmenden Gesamtmassestromes hinter dem schwer umströmbaren Körper (1-8) liegt.

8. Vorrichtung nach einem der vorhergehenden Ansprüche, **dadurch gekennzeichnet dass** zwischen der Eingangsöffnung (1-2) und der Ausgangsöffnung (1-3) des Gehäuses (1-1) weitere Zuführungskanäle (1-18) für die Beimischung von Komponenten zu den Masseströmen vorhanden sind.

9. Vorrichtung nach einem der vorhergehenden Ansprüche, **dadurch gekennzeichnet, dass** das Innere des Kammergehäuses (3-2), das über die Einlasse (3-3) befüllbar ist, eine Schachtelung weiterer Kammerkavitatoren mit Kammergehäuse (3-2) umfasst, jeweils mit schwer umströmbaren Körpern (1-8) und/oder schwer umströmbaren Teilbereichen (1-9).

10. Vorrichtung nach Anspruch 9, **dadurch gekennzeichnet, dass** jedes Kammergehäuse selbst wie das Gehäuse (1-1) für die nächstinnen gelegene Kammer fungiert, so dass ein System einer Kavitationskammer-Schachtelung entsteht, in der jede Kammer wie einen Kavitationskammerreaktor funktioniert.

11. Vorrichtung nach einem der vorhergehenden Ansprüche, **dadurch gekennzeichnet, dass** der Druck der Masseströme, die an jedem Einlass- bzw. Auslassstutzen (3-3) einführbar ist, unabhängig von allen anderen Masseströmen variierbar ist.

12. Vorrichtung nach einem der vorhergehenden Ansprüche, **dadurch gekennzeichnet, dass** ein hindurchgehender Hohlraum des Kammergehäuses (3-2) durch mindestens eine Trennwand (3-6) in mehrere Kammern unterteilt ist

13. Vorrichtung nach Anspruch 12, **dadurch gekennzeichnet, dass** über frei zu bestimmende Stellen auf dem schwer umströmbaren Körper einzelne Massenströme bei frei variierbaren Drücken zu- und/oder abgeführt werden können.

14. Vorrichtung nach einem der vorhergehenden Ansprüche, **dadurch gekennzeichnet, dass** das in der Durchflusskammer (1-4) angebrachte Kammergehäuse (2-2, 3-2) eine oder mehrere Einströmungsöffnungen (2-4, 2-5; 3-4, 3-5) an einem Ende in der Durchflusskammer (1-4) und eine oder mehrere Ausströmungsöffnungen (2-4, 2-5; 3-4, 3-5) am anderen Ende in der Durchflusskammer (1-4) aufweist.

15. Vorrichtung nach Anspruch 14, **dadurch gekennzeichnet, dass** eine Einströmungsöffnung (2-5, 3-5) am einen Ende des Kammergehäuses (2-2, 3-2) an einer Mittelachse der Durchflusskammer (1-4) liegt und einen Düsen-Eingang bildet, und dass mehrere Ausströmungsöffnungen (2-4, 3-4) am anderen Ende des Kammergehäuses (2-2, 3-2) um die Mittelachse der Durchflusskammer (1-4) angeordnet sind.

16. Vorrichtung nach Anspruch 14, **dadurch gekennzeichnet, dass** mehrere Einströmungsöffnungen (2-4, 3-4) am einen Ende des Kammergehäuses (2-2, 3-2) um eine Mittelachse der Durchflusskammer (1-4) angeordnet sind, und dass eine Ausströmungsöffnung (2-5, 3-5) am anderen Ende des Kammergehäuses (2-2, 3-2) an der Mittelachse der Durchflusskammer (1-4) liegt und einen Düsen-Ausgang bildet.

17. Vorrichtung nach einem der vorhergehenden Ansprüche, **dadurch gekennzeichnet, dass** die Aufhängung bzw. Aufhängungen mit Einlass- bzw. Auslassstutzen (2-3, 3-3) sich in Richtung quer zur Mittelachse der Durchflusskammer (1-4) erstreckt bzw. erstrecken.

18. Verwendung einer Vorrichtung nach einem der Ansprüche 1 bis 17 zum Vermischen oder Entmischen der festen, flüssigen oder gasförmigen Komponenten eines oder mehrerer Masseströme.

19. Verwendung nach Anspruch 18,
zum Entgasen von Wasser und/oder anderer gashaltiger Stoffe, oder
zum Verbinden entgasten Wassers und/oder gashaltiger Stoffe mit hydrophoben Stoffen oder andere nicht oder schwer wasserlösliche Verbindungen, oder
zur Methanolsynthese durch Mischen von Wasser oder entgastem Wasser mit Methan, oder
zur Aufbereitung von Wasser und Klärschlämmen, oder
zum Einbringen von Gasen in Lebensmittel, oder
zur Homogenisierung von Lebensmitteln, oder
zur Anreicherung von Kraftstoffen und Brennstoffen mit verbrennungsfördernden Gasen und/oder mit Wasser vor dem Verbrennungsprozess, oder
zur Stabilisierung und/oder Homogenisierung von Kraftstoff und Brennstofflagern über längeren Zeitraum, oder
zum Belüftung von Gewässern in der Umweltrenaturierung, oder
zum Schwermetallaufbruch in organischer Feststoffmatrix, oder
zur Keimabtötung in Wasser, vorzugsweise in Trinkwasser, in Abwässern oder in Schwimmbädern, oder
zur Durchführung chemischer Prozesse, die in Kavitationsfeldern oder in Kavitationsfeldern gemischten Systemen ablaufen.

## Claims

1. Device for mixing or separation of solid, liquid or gaseous components of a mass-flow, or multiple through-flowing, entrained and/or counter-current mass-flows by means of a hydrodynamic super-cavitation field or multiple hydrodynamic super-cavitation fields in order to generate a mixture, an emulsion or a suspension, as well as novel molecular combinations or separations, comprising:
a housing (1-1) which comprises one or more inlet openings (1-2) for the supply of at least a part of a mass-flow and one or more outlet openings (1-3) for the discharge of a mass-flow,
wherein the housing (1-1) comprises a flow chamber (1-4) having a flow-impeding body (1-8) for generating the super-cavitation field or the super-cavitation fields arranged therein by means of a retainer (1-6),
wherein the flow-impeding body (1-8) has at least one flow-impeding portion (1-9) which respectively provides for a local flow constriction, wherein the cross-section of the flow chamber (1-4) which is taken perpendicular to its central axis, at least in a part of the area which surrounds the flow-impeding body (1-8), becomes firstly larger and then smaller with changing flow directions of the total mass-flow flowing through the flow chamber (1-4),
**characterized in that** the flow-impeding body (1-8) is applied on a chamber housing (2-2, 3-2), **in that** the chamber housing (2-2, 3-2) is mounted to the housing with one or more attachments, and **in that** at least one inlet or outlet connection (2-3, 3-3) for inflow or outflow of components is mounted on this attachment or on these attachments.

2. Device according to claim 1, **characterized in that** the flow-impeding body (1-8) is displaceable along the direction of the central axis of the flow chamber (1-4).

3. Device according to claim 1 or 2, **characterized in that** the flow-impeding body (1-8) is displaceable perpendicular to the direction of the central axis of the flow chamber (1-4).

4. Device according to one of the preceding claims, **characterized in that** the at least one flow-impeding portion (1-9) is configured so that its cross-section, which is taken perpendicular to the central axis of the flow chamber (1-4), is greater at that end of the part of the body lying closest to the inlet opening (1-2) than at the end that lies closest to the outlet opening (1-3).

5. Device according to one of the preceding claims, **characterized in that** the at least one flow-impeding portion (1-9) is configured as a truncated cone.

6. Device according to one of the preceding claims, **characterized in that** the at least one flow-impeding portion (1-9) is configured as a truncated cone and/or cylinder with concave and/or convex surfaces.

7. Device according to one of the preceding claims, **characterized in that** the flow-impeding body (1-8) is arranged such that the apex of the flow chamber (1-4) contains at least one bulge (1-7) which lies behind the flow-impeding body (1-8) in the flow direction of the total mass-flow flowing through the flow chamber (1-4).

8. Device according to one of the preceding claims, **characterized in that** between the inlet opening (1-2) and the outlet opening (1-3) of the housing (1-1), further supply channels (1-18) are present for the addition of components to the mass-flows.

9. Device according to one of the preceding claims, **characterized in that** the inside of the chamber housing (3-2), which is fillable via the inlets (3-3), comprises a nesting of further chamber cavitators with chamber housings (3-2), respectively having flow-impeding bodies (1-8) and/or flow-impeding portions (1-9).

10. Device according to claim 9, **characterized in that** each chamber housing itself operates like the housing (1-1) for the nearest lying chamber, so that a system of a cavitation chamber-nesting results, in which each chamber functions as a cavitation chamber reactor.

11. Device according to one of the preceding claims, **characterized in that** the pressure of the mass-flows, which is introducible at each inlet or outlet connection (3-3), is variable independently of all other mass-flows.

12. Device according to one of the preceding claims, **characterized in that** a cavity extending through the chamber housing (3-2) is divided by at least one separating wall (3-6) into multiple chambers.

13. Device according to claim 12, **characterized in that** individual mass-flows can be supplied and/or drawn of at freely variable pressures at freely determinable positions on the flow-impeding body.

14. Device according to one of the preceding claims, **characterized in that** the chamber housing (2-2, 3-2) mounted in the flow chamber (1-4) comprises one or more inflow openings (2-4, 2-5; 3-4, 3-5) at one end in the flow chamber (1-4) and one or more outflow openings (2-4, 2-5; 3-4, 3-5) at the other end in the flow chamber (1-4).

15. Device according to claim 14, **characterized in that** one inflow opening (2-5, 3-5) at one end of the chamber housing (2-3, 3-2) lies on a central axis of the flow chamber (1-4) and forms a nozzle inlet, and **in that** multiple outflow openings (2-4, 3-4) at the other end of the chamber housing (2-2, 3-2) are arranged around the central axis of the flow chamber (1-4).

16. Device according to claim 14, **characterized in that** multiple inflow openings (2-4, 3-4) at one end of the chamber housing (2-2, 3-2) are arranged around a central axis of the flow chamber (1-4), and **in that** one outflow opening (2-5, 3-5) at the other end of the chamber housing (2-2, 3-2) lies on the central axis of the flow chamber (1-4) and forms a nozzle outlet.

17. Device according to one of the preceding claims, **characterized in that** the attachment or attachments with inlet or outlet connections (2-3, 3-3) extends or extend in a direction transverse to the central axis of the flow chamber (1-4).

18. Use of a device according to one of the claims 1 to 17 for mixing or separation of solid, fluid or gaseous components of one or more mass-flows.

19. Use according of claim 18,
for de-gassing of water and/or other gas-containing substances, or
for binding de-gassed water and/or gas-containing substances with hydrophobic substances or other non- or poorly water-soluble bonds, or
for methanol synthesis through mixing of water or de-gassed water with methane, or
for conditioning of water and effluent sludge, or
for introduction of gases into comestibles, or
for homogenization of comestibles, or
for enrichment of fuels and combustibles with combustion-promoting gases and/or with water prior to the combustion process, or
for stabilization and/or homogenization of fuel and combustible storages over longer periods, or
for aeration of waters in environmental re-naturisation, or
for heavy metal break-up in organic solid material matrix, or
for killing germs in water, preferably in potable water, in effluent or in swimming pools, or
for carrying out chemical processes which occur in cavitation fields or in cavitation field-mixed systems.

## Revendications

1. Dispositif de mélange ou de démélange de séparation solides, liquides ou gazeux d'un flux de matière ou de plusieurs flux de matière se traversant, s'écoulant parallèlement et/ou s'écoulant dans des sens contraires, au moyen d'un champ de supercavitation hydrodynamique ou de plusieurs champs de supercavitation hydrodynamiques, afin de produire un mélange, une émulsion ou une suspension, ainsi que de nouvelles liaisons et/ou séparations moléculaires, comprenant
un boîtier (1-1) présentant une ou plusieurs ouverture(s) d'admission (1-2) pour l'amenée d'au moins une partie d'un flux de matière, et une ou plusieurs ouverture(s) de sortie (1-3) pour l'évacuation d'un flux de matière,
le boîtier (1-1) présentant une chambre de débit (1-4) dotée d'un corps difficilement contournable (1-8) disposé à l'intérieur à l'aide d'un support (1-6) et destiné à produire le champ de supercavitation et/ou les champs de supercavitation,
le corps difficilement contournable (1-8) possédant au moins une zone partielle difficilement contournable (1-9) assurant respectivement une contrainte locale d'écoulement, la section de la chambre de débit (1-4) perpendiculaire à l'axe médian de ladite chambre étant tout d'abord plus importante puis moins importante au moins dans une partie de la zone entourant le corps difficilement contournable (1-8), lorsque l'écoulement du flux de matière total traversant la chambre de débit (1-4) change de direction,
**caractérisé en ce que** le corps difficilement contournable (1-8) est disposé sur un boîtier de chambre (2-2, 3-2), **en ce que** le boîtier de chambre (2-2, 3-2) comprenant une ou plusieurs suspension(s) disposée(s) dans la chambre de débit est installé sur le boîtier, et **en ce qu'**au moins une tubulure d'admission et/ou d'évacuation (2-3, 3-3) destinée à amener et/ou évacuer les composants est installée sur cette suspension et/ou sur ces suspensions.

2. Dispositif selon la revendication 1, **caractérisé en ce que** le corps difficilement contournable (1-8) est coulissant le long de la direction de l'axe médian de la chambre de débit (1-4).

3. Dispositif selon la revendication 1 ou 2, **caractérisé en ce que** le corps difficilement contournable (1-8) est coulissant perpendiculairement à la direction de l'axe médian de la chambre de débit (1-4).

4. Dispositif selon l'une quelconque des revendications précédentes, **caractérisé en ce que** ladite au moins une zone partielle difficilement contournable (1-9) est conçue de sorte que sa section perpendiculaire à l'axe médian de la chambre de débit (1-4) est plus importante à l'extrémité du corps partiel la plus proche de l'ouverture d'admission (1-2) qu'à l'extrémité la plus proche de l'ouverture de sortie (1-3).

5. Dispositif selon l'une quelconque des revendications précédentes, **caractérisé en ce que** ladite au moins une zone partielle difficilement contournable (1-9) est conçue comme un cône tronqué.

6. Dispositif selon l'une quelconque des revendications précédentes, **caractérisé en ce que** ladite au moins une zone partielle difficilement contournable (1-9) est conçue comme un cône tronqué et/ou un cylindre doté de surfaces concaves et/ou convexes.

7. Dispositif selon l'une quelconque des revendications précédentes, **caractérisé en ce que** le corps difficilement contournable (1-8) est disposé de sorte que le sommet de la chambre de débit (1-4) contient au moins un renflement (1-7) situé derrière le corps difficilement contournable (1-8) dans la direction d'écoulement du flux de matière total traversant la chambre de débit (1-4).

8. Dispositif selon l'une quelconque des revendications précédentes, **caractérisé en ce que** d'autres canaux d'amenée (1-18) pour l'incorporation de composants aux flux de matière sont présents entre l'ouverture d'admission (1-2) et l'ouverture de sortie (1-3) du boîtier (1-1).

9. Dispositif selon l'une quelconque des revendications précédentes, **caractérisé en ce que** l'intérieur du boîtier de chambre (3-2) pouvant être rempli par les entrées (3-3) comporte un emboîtement d'autres cavitations de chambre avec le boîtier de chambre (3-2), respectivement avec des corps difficilement contournables (1-8) et/ou des zones partielles difficilement contoumables (1-9).

10. Dispositif selon la revendication 9, **caractérisé en ce que** chaque boîtier de chambre fonctionne lui-même comme le boîtier (1-1) pour la chambre suivante placée à l'intérieur, de sorte que cela crée un système d'emboîtement de chambres de cavitation dans lequel chaque chambre fonctionne comme un réacteur de chambre de cavitation.

11. Dispositif selon l'une quelconque des revendications précédentes, **caractérisé en ce que** la pression des flux de matière pouvant être introduite au niveau de chaque tubulure d'admission et/ou d'évacuation (3-3) peut varier indépendamment de tous les autres flux de matière.

12. Dispositif selon l'une quelconque des revendications précédentes, **caractérisé en ce qu'**une cavité traversante du boîtier de chambre (3-2) est divisée par au moins une cloison (3-6) en plusieurs chambres.

13. Dispositif selon la revendication 12, **caractérisé en ce que** des flux de matière individuels peuvent être amenés et/ou évacués au-dessus de points à définir librement sur le corps difficilement contournable dans le cas de pressions librement variables.

14. Dispositif selon l'une quelconque des revendications précédentes, **caractérisé en ce que** le boîtier de chambre (2-2, 3-2) installé dans la chambre de débit (1-4) comprend une ou plusieurs ouvertures d'admission (2-4, 2-5 ; 3-4, 3-5) sur une extrémité dans la chambre de débit (1-4) et une ou plusieurs ouvertures d'évacuation (2-4, 2-5 ; 3-4, 3-5) sur l'autre extrémité dans la chambre de débit (1-4).

15. Dispositif selon la revendication 14, **caractérisé en ce qu'**une ouverture d'admission (2-5, 3-5) se situe sur une extrémité du boîtier de chambre (2-2, 3-2) sur un axe médian de la chambre de débit (1-4) et forme une entrée de buse, et **en ce que** plusieurs ouvertures d'évacuation (2-4, 3-4) sont disposées à l'autre extrémité du boîtier de chambre (2-2, 3-2) autour de l'axe médian de la chambre de débit (1-4).

16. Dispositif selon la revendication 14, **caractérisé en ce que** plusieurs ouvertures d'admission (2-4, 3-4) sont disposées sur une extrémité du boîtier de chambre (2-2, 3-2) autour d'un axe médian de la chambre de débit (1-4), et **en ce qu'**une ouverture d'évacuation (2-5, 3-5) se situe sur l'autre extrémité du boîtier de chambre (2-2, 3-2) sur l'axe médian de la chambre de débit (1-4) et forme une sortie de buse.

17. Dispositif selon l'une quelconque des revendications précédentes, **caractérisé en ce que** la suspension et/ou les suspensions comprenant une tubulure d'admission et/ou d'évacuation (2-3, 3-3) s'étend et/ou s'étendent dans une direction transversale à l'axe médian de la chambre de débit (1-4).

18. Utilisation d'un dispositif selon l'une quelconque des revendications 1 à 17 pour mélanger ou séparer les composants solides, liquides ou gazeux d'un ou de plusieurs flux de matière.

19. Utilisation selon la revendication 18,
pour dégazer de l'eau et/ou d'autres matières contenant des gaz, ou
pour lier une eau dégazée et/ou des matières contenant des gaz à des matières hydrophobes ou d'autres liaisons non ou difficilement solubles dans l'eau, ou
pour la synthèse du méthanol par le mélange d'eau ou d'eau dégazée à du méthane, ou
pour le traitement de l'eau et de boues d'épuration, ou
pour introduire des gaz dans des aliments, ou
pour homogénéiser des aliments, ou
pour enrichir des carburants et combustibles en gaz favorisant la combustion et/ou en eau avant le processus de combustion, ou
pour stabiliser et/ou homogénéiser le stockage d'un carburant et d'un combustible pendant une période prolongée, ou
pour aérer des eaux dans le cadre du rétablissement de l'environnement naturel, ou pour la fracturation de métaux lourds dans une matrice solide organique, ou
pour éliminer les germes dans l'eau, de préférence dans l'eau potable, dans les eaux usées ou dans les piscines, ou
pour réaliser des processus chimiques se déroulant dans des champs de cavitation ou dans des systèmes mélangés de champs de cavitation.
